# EUROPEAN PATENT APPLICATION

(11) **EP 0 977 458 A1**
(43) Date of publication of application: **02.02.2000**
(21) Application number: 99113169.9
(22) Date of filing: 07.07.1999
(51) Int. Cl.: H04Q 11/04, H04L 12/56

(54) **Uninterrupted extension system and method for ATM switches**

(30) Priority: 09.07.1998 JP 20851898
(71) Applicant: NEC CORPORATION, Tokyo (JP)
(72) Inventor: Nishizaki, Hideki, Minato-ku, Tokyo (JP); Iwasaki, Takashi, Minato-ku, Tokyo (JP)
(74) Representative: Glawe, Delfs, Moll & Partner

(57) **Abstract**

An ATM device comprises a basic module route passing through a basic module 11 and an extension module route bypassing through an extension module 12. The basic module produces a route switch instruction when the basic module route is switched to the extension module route. In response to the production of the route switch instruction, a switch control cell is inserted into all data received. When the switch control cell is detected in the data on the basic module route, main signal cells on the basic module route are all discarded. When the switch control cell is detected in the data on the extension module route, a selection control signal is produced which indicates switching from the basic module route to the extension module route. In response to the production of the selection control signal, the basic module route is switched to the extension module route.

## Description

### BACKGROUND OF THE INVENTION

The present invention relates to an uninterrupted extension system for asynchronous transfer mode (ATM) devices and an uninterrupted extension method.

ATM devices are available which concentrate input lines and switch them to predetermined routes. To increase the volume of data to be communicated and improve the reliability of communication functions, there has been the demand that the ATM devices of this type switch an increased number of input channels to their corresponding output channels.

As will be described below, when an extension module is added to a single basic module to extend an ATM switch, conventional ATM devices require change of routing from a route in the basic module to a route passing through the extension module. To this end, the conventional ATM devices either neglect a data loss, if any, or requires previously interruption of data flows.

### SUMMARY OF THE INVENTION

An object of the present invention is to provide an uninterrupted extension system which can change without interruption, when an extension module is added to a single basic module to extend an ATM switch, routing from a route in the basic module to a route passing through the extension module.

Another object of the present invention is to provide an ATM switch suitable for the above-mentioned uninterrupted extension system.

An uninterrupted extension system for an ATM device according to the present invention comprises a basic module, and an extension module for the increase of a capacity of an ATM switch.

According to an aspect of the present invention, the ATM device having a basic module route passing through the basic module and an extension module route bypassing through the extension module. The basic module includes an input interface adapted to receive input data and a switch control cell insertion unit for inserting a switch control cell into the data supplied from the input interface. The basic module further includes a branch circuit for branching the data with the switch control cell inserted therein to send one of the branched data on the basic module route and the other of the branched data to the extension module. The basic module further includes an extension input interface to receive data from the extension module. A selection circuit selects, in response to the one branched data transmitted on the basic module route and the other branched data transmitted on the extension module route through the extension input interface, either one of the data on these two routes to send the selected data. A switch control unit detects the switch control cell contained in the one branched data transmitted on the basic module route and also detects the switch control cell contained in the other branched data transmitted on the extension module route. The switch control unit gives, in response to the detection of the switch control cell contained in the other branched data, a switch instruction to the selection circuit to select the other branched data transmitted on the extension module route.

In an uninterrupted extension method for the ATM device according to the present invention, the basic module produces a route switch instruction when the basic module route is switched to the extension module route. In response to the production of the route switch instruction, the switch control cell is inserted into all data received. When the switch control cell is detected in the data transmitted on the basic module route, all main signal cells on the basic module route are discarded. When the switch control cell is detected in the data on the extension module route, a selection control signal is produced that indicates switching from the basic module route to the extension module route. In response to the production of the selection control signal, the basic module route is switched to the extension module route.

### BRIEF DESCRIPTION OF THE DRAWINGS

Fig. 1 is a block diagram illustrating an example of an ATM device extended with a prior art;
Fig. 2 is a view illustrating a configuration of an uninterrupted extension system for an ATM device according to a preferred embodiment of the present invention;
Fig. 3 is a view illustrating a configuration of an ATM switch in the extension module in Fig. 2;
Fig. 4 is a flow chart illustrating an operation of an uninterrupted extension system according to the present invention;
Fig. 5 is a flow chart illustrating processing carried out by the switch control unit in Fig. 2; and
Fig. 6 is a flow chart illustrating processing carried out by an (n · m x n) ATM switch in Fig. 3.

### DESCRIPTION OF THE PREFERRED EMBODIMENT

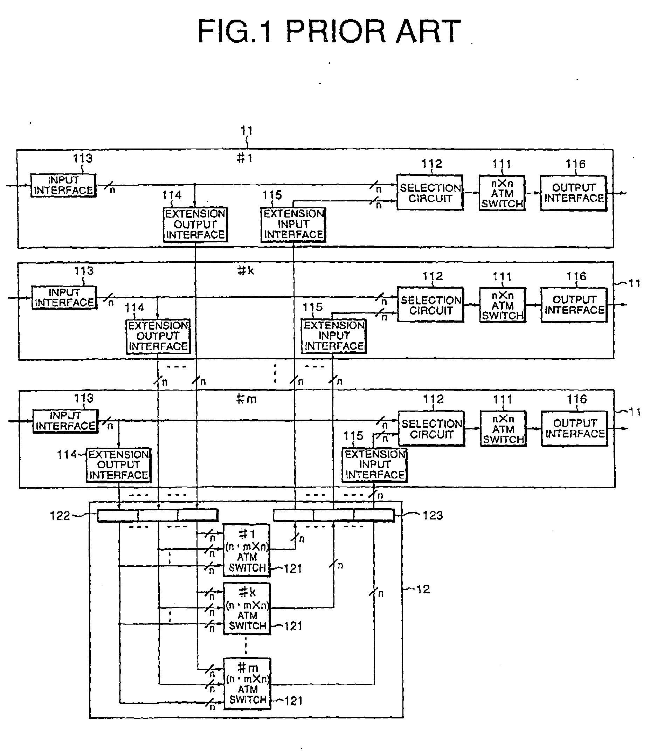

Referring to Fig. 1, a conventional ATM device is described for the purpose of facilitating the understanding of the present invention. Fig. 1 shows an exemplified configuration of an ATM device in which a plurality of basic modules and a single extension module is added to a basic module formed of a single (n x n) cross-connect device, in order to meet the requirements for increasing a switch capacity of an ATM switch. More specifically, the ATM device is formed of an m number of basic modules 11 and a single extension module 12. In the figure, a first basic module 11 bears the symbol #1, a k-th basic module 11 bears the symbol #k, and an m-th basic module bears the symbol #m, wherein k, m, and n each represents a natural number.

Each basic module 11 comprises an (n x n) ATM switch 111, a selection circuit 112, an input interface 113, an extension output interface 114, an extension input interface 115, and an output interface 116.

The extension module 12 comprises an m number of (n · m x n) ATM switches 121, an input interface 122, and an output interface 123. In the extension module 12, a first (n · m x n) ATM switch 121 bears the symbol #1, a k-th (n · m x n) ATM Switch 121 bears the symbol #k, and an m-th (n · m x n) ATM switch 121 bears the symbol #m.

In the basic module 11, an n strings of ATM cell data (hereinafter, referred to as data) are supplied in parallel through an n number of signal lines from the input interface 113. In the ATM device, the data are formed by each cell as a unit. The n strings of data are each branched into two sets of branched data. One n strings of branched data are supplied to the selection circuit 112 and the other n strings of branched data are supplied to the extension output interface 114.

The selection circuit 112 receives the n strings of branched data supplied from the input interface 113 and also receives the n strings of data supplied from the extension input interface 115.

The (n x n) ATM switch 111 is a switch having a relatively small capacity. The (n x n) ATM switch 111 receives, through the selection circuit 112, either the n strings of branched data supplied from the input interface 113 or the n strings of branched data supplied from the extension input interface 115. The (n x n) ATM switch 111 supplies the n strings of output data to the output interface 116.

In the extension module 12, the m number of (n · m x n) ATM switches 121 corresponds one by one to the m number of basic modules 11. The input interface 122 receives an n · m strings of data. The input interface 122 distributes the n · m strings of data to all (n · m x n) ATM switches 121. In other words, each (n · m x n) ATM switch 121 receives an m groups of data, with one group containing the n strings of data. Each (n · m x n) ATM switch 121 produces the n strings of data.

The output interface 123 each receives the n strings of data from the m number of (n · m x n) ATM switches 121. The output interface 123 groups the n · m strings of data into an m groups of data, each group containing the n strings of data. For example, the n strings of data supplied from the k-th (n · m x n) ATM switch 121 (#k) are supplied to the k-th basic module 11 (#k) through the output interface 123 (#k). Thus, there is provided an extended (n · m x n · m) cross-connect device from the (n x n) cross-connect device.

However, the ATM device of the type described hardly has the extended configuration as shown in Fig. 1 at the beginning of the operation. The operation is initiated with the single basic module 11 forming the (n x n) cross-connect device, to which the basic module(s) and the extension module is added when necessary.

When the extension module 12 is added to the ATM device operated with the single basic module 11 (without other basic modules 11), the following control method may be used. A cell received from an input channel of the basic module 11 and switched to an output channel in the same basic module 11 is switched to a route passing through the extension module 12 after the extension module 12 is added to. The route passing through the extension module 12 is the route connecting the extension output interface 114, the input interface 122, the (n · m x n) ATM switch 121, the output interface 123, and the extension input interface 115.

The reason the above-mentioned control method is used is as follows. If the extended configuration as shown in Fig. 1 is used in the future, the cell switched across a plurality of basic modules 11 always passes through the extension module 12. Accordingly, control of the device is simplified when other cells in the basic module 11 which use the same input and output channels are also directed to the extension module 12.

However, the conventional ATM device has the following problems. It is assumed that a single extension module 12 is connected to a single basic module in the initial stage of the transition to the extended configuration of the ATM device as shown in Fig. 1. It is also assumed that the switching of the input channel and the output channel is made in the same basic module 11.

To change the route passing through the basic module 11 to the route bypassing through the extension module 12, there is a delay in, for example, the (n · m x n) ATM switch 121 on the route bypassing through the extension module 12 as compared with the route in the basic module 11. If the selection circuit 112 is switched to select the data on the extension module 12, there may be a difference between the cell from the basic module 11 and the cell from the extension module 12 due to a loss or duplication of the cell.

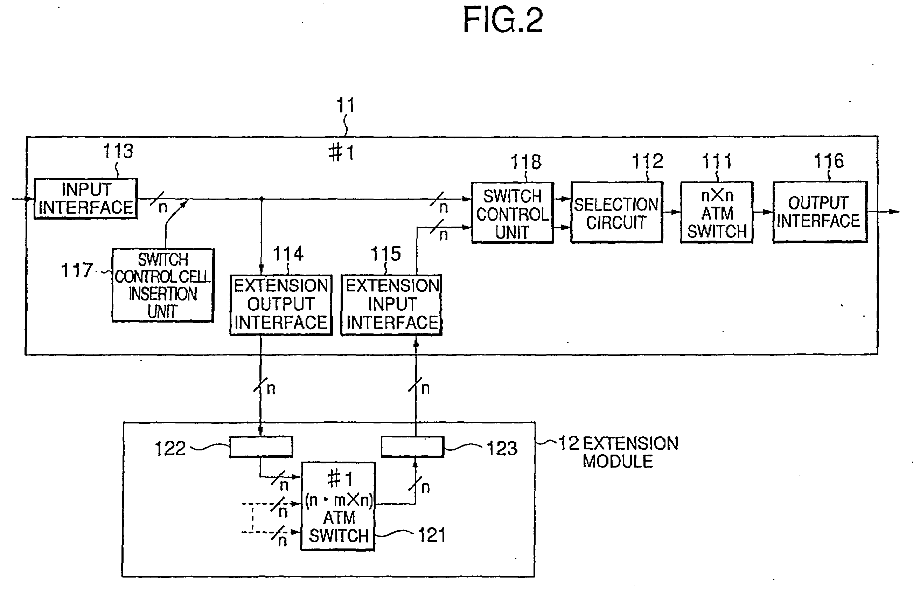

Referring to Fig. 2, an uninterrupted extension system for the ATM device according to an embodiment of the present invention is described. In Fig. 2, similar components to those in Fig. 1 are depicted by the same reference numerals. The ATM device comprises a basic module 11 and an extension module 12.

The basic module 11 comprises an (n x n) ATM switch 111, a selection circuit 112, an input interface 113, an extension output interface 114, an extension input interface 115, an output interface 116, a switch control cell insertion unit 117, and a switch control unit 118.

The extension module 12 comprises an (n · m x n) ATM switch 121, an input interface 122, and an output interface 123. The configuration shown in Fig. 2 is an example where a single extension module 12 is added to a single basic module 11. This example corresponds to an initial stage to have the extended configuration in order to increase the cross-connect capacity in the future.

In the basic module 11, an n strings of data are sent through an n number of signal lines from the input interface 113. The n strings of data are branched into two branched data. In Fig.2, a cross point depicted at a black circle serves as a branch circuit. One n strings of branched data are supplied to the switch control unit 118 and the other n strings of branched data are supplied to the extension output interface 114.

The switch control cell insertion unit 117 inserts a switch control cell into the cell for the ATM data, before the n strings of data from the input interface 113 are branched. The switch control unit 118 receives the n strings of data supplied from the input interface 113 and the n strings of data supplied from the extension input interface 115. The selection circuit 112 receives 2 multiplied by n strings of data from the switch control unit 118.

The (n x n) ATM switch 111 is a switch having a relatively small capacity. The (n x n) ATM switch 111 is supplied, through the selection circuit 112, either with the n strings of data supplied from the input interface 113 or the n strings of data supplied from the extension input interface 115. The (n x n) ATM switch 111 supplies the n strings of output data to the output interface 116.

The extension module 12 comprises the m number of (n · m x n) ATM switches as in Fig. 1. However, for the purpose of convenience and clarification, only a single (n · m x n) ATM switch 121 is illustrated in Fig. 2 that sends the cell for the basic module 11 (#1). In this example, the input interface 122 receives the n strings of branched data from the basic module 11 (#1). The (n · m x n) ATM switch 121 (#1) also receives only one group of data of the n strings. This is because other input terminals for the remaining groups of the (n · m x n) ATM switches 121 (#1) are not connected to the corresponding basic module.

The n strings of data supplied from the (n · m x n) ATM switch 121 (#1) are supplied to the extension output interface 115 in the basic module 11 through the output interface 123.

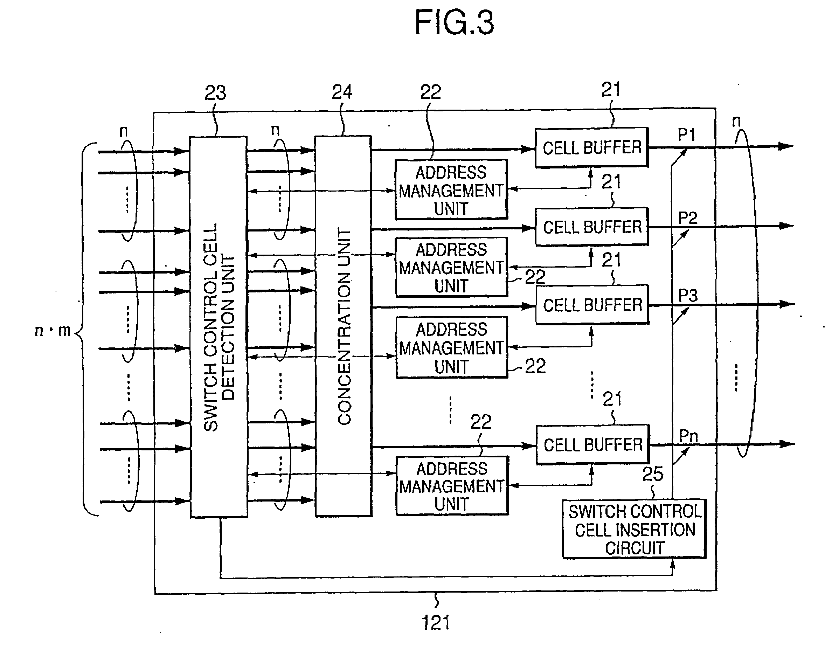

Fig. 3 is a block diagram illustrating an internal configuration of the (n · m x n) ATM switch 121 in Fig. 2. The (n · m x n) ATM switch 121 comprises an m number of cell buffers 21, an m number of address management units 22, a switch control cell detection unit 23, a concentration unit 24, and a switch control cell insertion circuit 25.

The (n · m x n) ATM switch 121 receives n · m strings of data. The cells received by the (n · m x n) ATM switch 121 are supplied to the concentration unit 24 through the switch control cell detection unit 23. In the concentration unit 24, only the cells directed to the basic module 11 (#1) are selected and are supplied to the cell buffers 21. It is noted that, in the example in Fig. 2 which the present invention expects, only the cells from the basic module 11 (#1) are considered.

The switch control cell detection unit 23 detects the switch control cell contained in the cells received. The address management unit 22 manages and controls read addresses and write addresses for the corresponding cell buffer 21. In addition, the address management unit 22 notifies the switch control cell detection unit 23 of a residual state of a queue. The switch control cell insertion circuit 25 insert a switch control cell into the cells on the output side of the cell buffer 21.

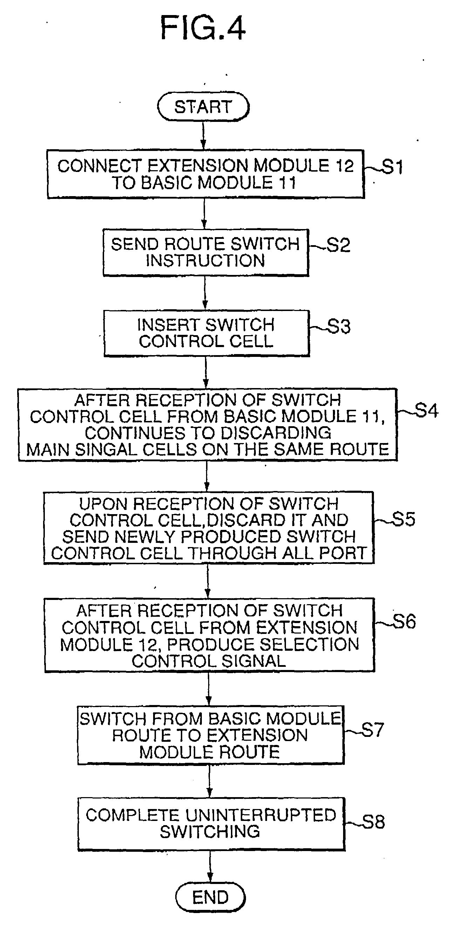

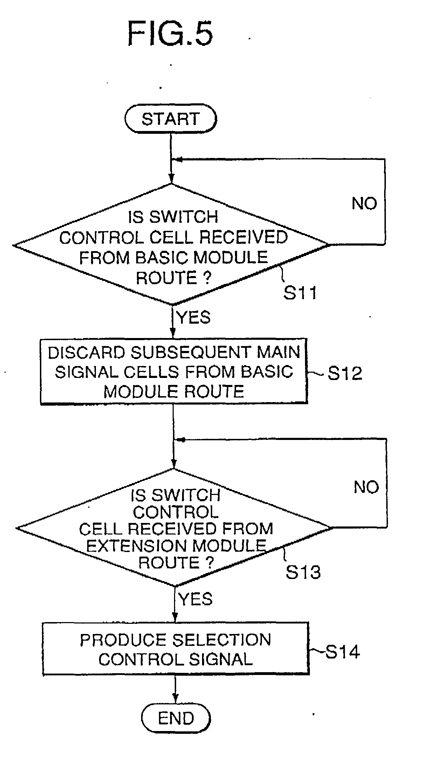

Fig. 4 is a flow chart illustrating the entire operation of the uninterrupted extension system according to the present invention. Fig. 5 is a flow chart illustrating processing carried out by the switch control unit 118.

An operation of the uninterrupted extension system is described below with reference to Figs. 2, 4, and 5. The ATM device has two routes for the cells. One route is for transmitting the cell through the basic module 11 and is hereinafter referred to as a basic module route. The other route is for transmitting the cell from the basic module 11 through the extension module 12 and is hereinafter referred to as an extension module route.

At a step S1, the extension module 12 is connected to the basic module 11. At a step S2, a control unit (not shown) in the ATM device sends an instruction to switch the basic module route to the extension module route (hereinafter, referred to as a route switch instruction). The switch control cell insertion unit 117 inserts, in response to the route switch instruction, the switch control cell into all strings of cells simultaneously (step S3).

The switch control cell is defined in the subject ATM device and is used for switch control of the route as described above. The switch control cell may be inserted into a time slot formed by means of, for example, buffering the cell. If an information transfer cell is inserted into the cell periodically in the ATM device for the control of the ATM device, the switch control cell may be inserted into the information transfer cell. Hereinafter, the cell for the ATM data is referred to as a main signal cell in order to distinguish it from the switch control cell.

The switch control cell inserted is branched into two sections as in the main signal cell. One branched section reaches the switch control unit 118 and the other branched section reaches the switch control unit 118 after passing through the extension module route.

The switch control unit 118 always receives the n strings of data supplied on the basic module route and the n strings of data supplied on the extension module route. The switch control unit 118 supplies the n strings of data on these two routes to the selection circuit 112 in a normal mode when no route switch control processing is performed. The switch control unit 118 supplies a selection control signal to the selection circuit 112, in which the selection control signal indicates switching from the basic module route to the extension module route.

The selection circuit 112 always receives the n strings of data on the basic module route having passed through the switch control unit 118 and the n strings of data on the extension module route. The selection circuit 112 selects the n strings of data on the basic module route when no selection control signal is received and supplies the n strings of data to the (n x n) ATM switch 111.

In response to the route switch instruction received from the control unit in the ATM device, the switch control unit 118 and the selection circuit 112 perform the following processing. When receiving the switch control cell through a communication line on the basic module route (step S11), the switch control unit 118 discards all main signal cells arrived subsequently and successively. The switch control unit 118 inserts a blank cell in place of the discarded cell and sends the cell to the selection circuit 112 (steps S4 and S12). Next, when the switch control cell is received from the communication line on the extension module route (step S13), the switch control unit 118 supplies the selection control signal to the selection circuit 112 at the timing of reception (steps S6 and S14). The selection circuit 112 switches, in response to the selection control signal, the communication line on the basic module route to the communication line on the extension module route. The selection circuit 112 then supplies the n strings of data on the extension module to the (n x n) ATM switch 111 (step S7). The switch control unit 118 always discards the received switch control cell. The uninterrupted switch from the basic module route to the extension module route is completed in the manner described above (step S8).

The switch control cell inserted by the switch control cell insertion unit 117 is delayed in a communication line on the extension module due to, for example, the (n · m x n) ATM switch 121. Because of this, the switch control cell on the basic module route reaches the switch control unit 118 earlier than the switch control cell on the extension module route does.

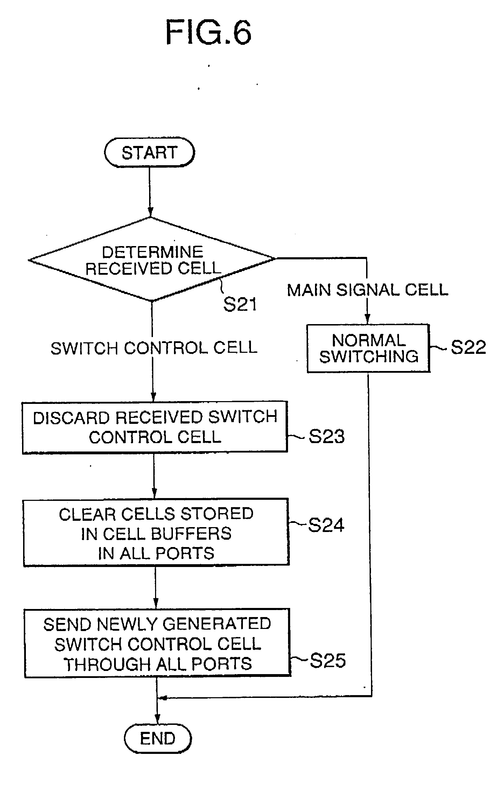

Fig. 6 is a flow chart illustrating processing carried out by the (n · m x n) ATM switch 121.

Referring to Figs. 3 and 6, the processing carried out by the (n · m x n) ATM switch 121 is described in detail.

Upon the reception of the n · m strings of data, the switch control cell detection unit 23 determines whether the received cell is the main signal cell or the switch control cell (step S21). If the received cell is the main signal cell, then the switch control cell detection unit 23 supplies the main signal cell as it is to the concentration unit 24. It is noted that the extension module 12 is connected only to the basic module 11 (#1). Therefore, the extension module 12 receives only the n strings of data (cell) from the basic module 11 (#1). When the received cell is the main signal cell, normal switching operation is carried out (step S22).

The concentration unit 24 selects only the cells directed to the basic module 11 (#1) and supplies them to the cell buffers 21, by means of carrying out filtering according to cell headers in all received cells. Each cell buffer 21 stores the received cell and reads out the stored cell at a predetermined timing.

On the other hand, when the switch control cell detection unit 23 determines that the received cell is the switch control cell, it discards the received switch control cell. The switch control cell detection unit 23 then notifies the address management unit 22 of information indicative of arrival of the switch control cell (step S23). The address management unit 22 gives, in response to the reception of the information indicative of the arrival of the switch control cell, a clear instruction to the cell buffers 21 in all ports to clear (discard) all queues remaining therein. In response to this, the cell buffers 21 clear all queues (step S24). At the same time, the switch control cell detection unit 23 gives an instruction to the switch control cell insertion circuit 25 to insert the switch control cell. The switch control cell insertion circuit 25 generates a new switch control cell in response to the instruction to insert the switch control cell. In addition, the switch control cell insertion circuit 25 inserts the generated switch control cell into the data supplied from all cell buffers 21 on the output side of the port of the cell buffers 21 (step S25). The above-mentioned operation corresponds to the step S5 in Fig. 4.

The main signal cells successively supplied to the switch control cell detection unit 23 are passed through the concentration unit 24 and sent through the cell buffer 21, as usual.

In the operation of the (n · m x n) ATM switch 121 during the uninterrupted switching between the basic module route and the extension module route in the basic module 11, what is important lies in the insertion of the switch control cell into the main signal cell at a predetermined position from all output ports (P1 through Pn). On the other hand, the concentration unit 24 distributes the received cells to the cell buffers 21 in all ports in the order of reception, which supplies the switch control cells as well one by one to the cell buffers 21 in all ports. In this way, the concentration unit 24 carries out distribution such that the main signal cells and the switch control cells are sent while keeping a predetermined order and relationship. In the (n · m x n) ATM switch 121 having such concentration unit 24, the uninterrupted switching can be made from the basic module route to the extension module route only by means of a series of control associated with the switch control cell insertion unit 117 and the switch control unit 118 provided in the above-mentioned basic module 11.

However, depending on the configuration of the concentration unit 24, it may distribute the cells in such a manner that all main signal cells directed to the basic module 11 are stored in a single cell buffer 21. In this event, the switch control cells are not sent from all ports. In such a case, the operation requires the switch control cell detection unit 23 and the switch control cell insertion circuit 25 illustrated in Fig. 3 as well as a series of control associated therewith.

Using the series of control described in conjunction with Fig. 3, it is possible to send the switch control cell from all ports (P1 through Pn) while keeping a predetermined order and relationship with respect to the main signal cell, independent of the manner of distribution by the concentration unit 24.

Therefore, the uninterrupted switching can be made from the basic module route to the extension module route when the extension module 12 is added to the basic module 11.

The uninterrupted extension system for the ATM device according to the present invention is configured as described above and has the following effects.

When the extension module is added to the single basic module in order to extend the ATM switch, no data are lost during the switching from the basic module route to the extension module route. It is unnecessary to previously stop the flow of the data for the operation. The ATM switch can be extended without interruption of the data flow. This may cope with various requirements for networks and communication channels in the future.

## Claims

1. An uninterrupted extension system for an ATM device comprising a basic module (11) and an extension module (12) for the increase of a capacity of an ATM switch, which is characterized in that:
said ATM device has a basic module route passing through said basic module and an extension module route bypassing through said extension module;
said basic module comprising:
an input interface (113) for receiving input data;
a switch control cell insertion unit (117) for inserting a switch control cell into the data supplied from said input interface;
branching means for branching the data containing the switch control cell inserted therein to two branched data to send one branched data on the basic module route and also send the other branched data to said extension module;
an extension input interface (115) for use in receiving the data supplied from said extension module;
a selection circuit (112) for selecting, in response to the one branched data supplied on the basic module route and the other branched data supplied from on said extension module route through said extension input interface, the data on either one of two routes to send the selected data; and
switch control unit (118) adapted to detect the switch control cell contained in the one branched data supplied on the basic module route and detect the switch control cell contained in the other branched data supplied on the extension module route, said switch control unit supplying a switch instruction to said selection circuit to select the other branched data supplied on the extension module route when said switch control unit detects the switch control cell contained in the other branched data.

2. An interrupted extension system as claimed in claim 1, wherein said extension module includes an extension ATM switch (121), said extension ATM switch comprising:
a switch control cell detection unit (23) adapted to determine whether the switch control cell is contained in the other branched data supplied on the extension module route and produce an switch control cell insertion instruction when said switch control cell detection unit detects the switch control cell; and
a switch control cell insertion circuit (25) for use in generating a new switch control cell in response to the switch control cell insertion instruction to insert the newly generated switch control cell into the data in all output ports of the extension ATM switch.

3. An uninterrupted extension system for an ATM device comprising at least one basic module (11) and an extension module (12) for the increase of a capacity of an ATM switch, which is characterized in that:
said ATM device has a basic module route passing through said basic module and an extension module route bypassing through said extension module;
said basic module comprising:
an input interface (113) for producing n strings of data (where n is a positive integer) in response to input data;
a switch control cell insertion unit (117) for inserting a switch control cell into each of the n strings of data supplied from said input interface;
branching means for branching the data containing the switch control cell inserted therein to two branched data to send one n strings of branched data on the basic module route and also send the other n strings of branched data to said extension module through an extension output interface (114);
an extension input interface (115) for use in receiving the n strings of data supplied from said extension module;
a selection circuit (112) for selecting, in response to the one n strings of branched data supplied on the basic module route and the other n strings of branched data supplied on the extension module route through said extension input interface, the n strings of data on either one of two routes to send the selected data;
an (n x n) ATM switch (111) for use in receiving an n strings of data from said selection circuit to send the data on an n number of output lines; and
an output interface (116) for sending the data supplied from said (n x n) ATM switch to the outside said basic module;
said extension module comprising:
an extension module input interface (122) for use in receiving the other n strings of branched data supplied from said extension output interface;
m number of (n · m x n) ATM switches (where m represents a positive integer) (121) for use in receiving the data supplied from said extension module input interface, each of said (n · m x n) ATM switches having n · m number of input ports and n number of output ports (P1 Pn); and
an extension module output interface (123) connected between said (n · m x n) ATM switch and said extension input interface;
said basic module further comprising:
a switch control unit (118) adapted to detect the switch control cell contained in the one n strings of branched data supplied on the basic module route and detect the switch control cell contained in the other n strings of branched data supplied on the extension module route, said switch control unit supplying a switch instruction to said selection circuit to select the other n strings of branched data supplied on the extension module route when said switch control unit detects the switch control cell contained in the other branched data.

4. An uninterrupted extension system as claimed in claim 3, wherein said (n · m x n) ATM switch comprises:
a switch control cell detection unit (23) adapted to determine whether the switch control cell is contained in the other n strings of branched data supplied on the extension module route and produce a switch control cell insertion instruction when said switch control cell detection unit detects the switch control cell;
a concentration unit (24) for assorting the n strings of data to be provided to a subject one of said basic module out of the data supplied through said n · m number of input ports;
n number of cell buffers (21) for temporarily holding the assorted n strings of data;
n number of address management units (22) for managing and controlling read and write addresses for the n number of said cell buffers, respectively; and
a switch control cell insertion circuit (25) for use in generating a new switch control cell in response to the switch control cell insertion instruction to insert the newly generated switch control cell into the data read out of the n number of said cell buffers.

5. An uninterrupted extension method for an ATM device comprising a basic module (11) and an extension module (12), which is characterized in that:
said ATM device has a basic module route passing through said basic module and an extension module route bypassing through said extension module;
said extension module being adapted to:
produce a route switch instruction upon switching from said basic module route to said extension module route;
insert, in response to the production of said route switch instruction, a switch control cell into all data received;
discard all main signal cells on said basic module route when the switch control cell is detected in the data on said basic module route;
produce a selection control signal to indicate switching from said basic module route to said extension module route when the switch control cell is detected in the data on said extension module route; and
switch said basic module route to said extension module route when the selection control signal is produced.

6. An uninterrupted extension method as claimed in claim 5, wherein said extension module is adapted to:
determine whether the received data is the main signal cell or the switch control cell to discard the received switch control cell and produce a switch control cell insertion instruction when said extension module determines that the received data is the switch control cell; and
generate a new switch control cell and insert the newly generated switch control cell into the data in all output ports in response to the production of the switch control cell insertion instruction.

7. An uninterrupted extension method for an uninterrupted extension system as claimed in claim 4, wherein:
said switch control cell detection unit transmits, in response to the main signal cell, the received main signal cell to said concentration unit;
said concentration unit assorting the main signal cells to be provided to a subject one of said basic module out of the received main signal cells to send the assorted main signal cells to the n number of said cell buffers;
each of said cell buffers storing the received main signal cell;
said switch control cell detection unit discarding, in response to the reception of the switch control cell, the received switch control cell and notifying each of said address management units of information indicating the arrival of the switch control cell, and said switch control cell detection unit supplying the switch control cell insertion instruction to said switch control cell insertion circuit;
each of said address management units supplying, in response to the reception of the information indicative of the arrival of the switch control cell, a clear instruction to the n number of said cell buffers to clear all queues held therein;
each of the n number of said cell buffers clearing all queues in response to the clear instruction;
said switch control cell insertion circuit inserting, in response to the switch control cell insertion instruction, the switch control cell into the data on the output side of all output ports in the n number of said cell buffers; and
the main signal cells subsequently and successively arrived to said switch control cell detection unit being passed in said concentration unit and supplied through the n number of said cell buffers.

8. A recording medium having a program capable of executing the uninterrupted extension method for the ATM device as claimed in claim 6.

9. A recording medium having a program capable of executing the uninterrupted extension method for the ATM device as claimed in claim 7.
